(19)

Europäisches
Patentamt
European
Patent Office
Office européen
des brevets

(11)  **EP 2 013 528 B1**

(12)  **EUROPEAN PATENT SPECIFICATION**

(45) Date of publication and mention
of the grant of the patent:
**29.02.2012  Bulletin 2012/09**

(21) Application number: **07734334.1**

(22) Date of filing: **19.04.2007**

(51) Int Cl.:
*F16L 55/165* *(2006.01)*    *F16L 55/18* *(2006.01)*
*B29C 63/32* *(2006.01)*

(86) International application number:
**PCT/IB2007/001015**

(87) International publication number:
**WO 2007/122472 (01.11.2007 Gazette 2007/44)**

(54) **METHOD AND MACHINE FOR LINING A PIPE**

VERFAHREN UND MASCHINE ZUR AUSKLEIDUNG EINES ROHRS

PROCEDE ET MACHINE PERMETTANT DE DEPOSER UN REVETEMENT A L'INTERIEUR D'UNE
CONDUITE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority:  **20.04.2006  PCT/EP2006/004588**

(43) Date of publication of application:
**14.01.2009  Bulletin 2009/03**

(73) Proprietor: **SOLETANCHE FREYSSINET
92500 Rueil Malmaison (FR)**

(72) Inventors:
• **ZIVANOVIC, Ivica
78140 Velizy Villacoublay (FR)**

• **TOURNEUR, Christian
78140 Velizy Villacoublay (FR)**
• **LECINQ, Benoît
78140 Velizy Villacoublay (FR)**
• **GEDALIA, Baruch
78140 Velizy Villacoublay (FR)**

(74) Representative: **Cabinet Plasseraud
52, rue de la Victoire
75440 Paris Cedex 09 (FR)**

(56) References cited:
**WO-A-00/17564        DE-A1- 2 160 144
DE-A1- 4 319 285       GB-A- 861 556
US-A- 3 177 902        US-A- 4 415 390
US-A1- 2004 003 773    US-A1- 2005 246 995**

## Description

The present invention relates to methods of reinforcing pipes and in particular repairing embedded pipes.

These pipes belong for example to a water delivery network. In their most common form these pipes are constituted by an end to end assembly of segments of pipe made from pre-stressed concrete and having a relatively large diameter of typically 0.5 m to more than 6 m. Water flows through said pipes under a pressure of up to around twenty bars. These segments of concrete pipe can incorporate an interior metal cylinder (liner). The latter is not designed, however, to carry the stress in terms of pressure due to the fluid flowing through. This stress is carried by passive reinforcement (pre-fabricated cylindrical reinforcement cage) or by the pre-stressing of the concrete. The latter is realized by means of wires wound in a spiral outside of the concrete core of the pipe segment. During manufacture of this segment its concrete core is rotated about its axis to receive the wire which is checked in order to be brought under pressure. This wire is then protected against corrosion by projecting a supplementary layer of concrete or mortar over twenty to thirty millimeters.

The wall of the pipe usually comprises:

- a concrete core incorporating a watertight liner constituted by a ductile cylinder made from thin steel (so-called embedded-cylinder pipe). The concrete of the core is distributed between an internal layer of a few centimeters in thickness which is situated on the internal side of the pipe and a thicker external layer which in most cases is not reinforced;

- pre-stressing wires wound in one or two layers around the concrete core;

- protective anti-corrosion mortar surrounding the wires in order to passivate them.;

- an optional paint or resin improving the anti-corrosion protection.

Pipes of this type are most frequently embedded. They are exposed to a risk of corrosion according to the aggressiveness of the environment. The most common form of degradation occurs as follows:

- migration of aggressive ions across the protective mortar;

- corrosion of the pre-stressing wires;

- breaking of the pre-stressing wires and local delamination;

- general delamination of the external mortar;

- depassivation of the wires and acceleration of corrosion.

The process can then accelerate and lead to the breaking of the pipe. Methods of magnetic or acoustic detection allow breaks in wire to be located and the state of the pipe to be assessed. Depending upon the assessed state a decision to repair can be taken.

Repair is generally carried out from the exterior. New reinforcements, passive or pre-stressed, are placed around the pipe in order to collar it. See for example international patent application published as WO 03/014614.

Repairs can also be carried out from the inside by incorporating within the pipe a resistant core for the purpose of re-establishing the resistance lost through the breaking of the pre-stressing wires. Repairs carried out from the inside are generally more expensive. Such repairs are carried out when the excavation works are impossible or difficult.

Repairs from the inside generally consist in placing a metal liner within the pipe. The interstice between the new resistant liner and the pipe is filled with grout. One difficulty is that a local error in realization can lead to infiltrations of water in the injected interstice. This water penetration can cause the concrete core of the pipe to be brought under pressure and can make the new resistant liner inefficient. This will result in a risk of a break in the pipe outside of the new liner.

Another difficulty is that the new metal liner must be welded in situ, both longitudinally and transversally. Such welds are difficult to perform and control and may fail, leading to a bursting of the repaired pipe.

When repairing from the inside the reinforcements added cannot be pre-stressed. When the pipe is brought under pressure these reinforcements undergo a certain elastic deformation (increase in their diameter) which causes cracking of the concrete of the core of the pipe. The concrete breaks in traction for a very small deformation, no material having the capacity to carry any significant stress for such extension. The cracking of the concrete causes two disadvantages. It worsens the flexural strength of the pipe and hence its capacity to resist dissymmetrical thrusts of the earth. It also allows corrosion to progress from the outside environment to the inside of the pipe. It also allows corrosion to progress from the exterior to the interior of the pipe. This risks causing early corrosion of the new reinforcement if it is metal. This problem often leads to the solutions for repairs from the inside with a basis of metal liners to be dismissed.

Patent document DE 2160144 discloses a machine for reinforcing an internal side of a pipe according to the preamble of claim 10.

An alternative solution is disclosed in US 2005/0246995 A1 where a composite structural reinforcement is applied, through in situ stratification of at least one band of reinforcement fibers and a resin matrix, the band being arranged according to a substantially helical path along the internal side of the pipe.

When the pipe is brought back into service the pressure of the liquid tightens the fibers of the band which, if it has appropriate dimensions, will be able to carry most of the radial stress. The composite structure avoids the risks of corrosion encountered with solutions using metal liners. The helical layout allows the in situ stratification of the composite to be carried out which facilitates implementation and avoids the problems of watertight connection, the band covering itself with each turn.

Although this method of reinforcing an embedded cylinder pipe is very efficient, it has been noticed that the application of the band of reinforcement fibers may be difficult and time consuming when using standard methods such as manual application of said band.

One has noticed for example that the band may locally detach or be crumpled when operating conditions are not satisfactory.

It is an object of the present invention to propose a perfected and efficient method of applying a band of reinforcement fibers where the applying conditions are safe and controllable during the whole process.

This object is achieved by means of the method of claim 1 and the machine of claim 10.

The invention thus proposes a method of reinforcing an embedded cylinder pipe by applying a composite structural reinforcement within the pipe through in situ stratification of at least one band of reinforcement fibers and a resin or a resin including matrix comprising the steps of:

- applying said band onto a contact area on an internal face of said pipe by means of a contacting member;
- moving said contacting member along an helical path so that said contact area follows said path;
- moving a main pressing member behind said contacting member along said path, to apply pressure to said band in a main pressure area separated from said contact area.

It is thus possible to control carefully the applying condition of the band onto the internal face of a pipe.

Due to the successive steps of contacting and pressing the band, it is in particular possible to control the stress level in the band during the applying process and to avoid advantageously local detachment or crumpling of the band onto the internal face of the pipe. The stratification of band is then homogeneous all along the pipe and the repair is tight and able to carry radial stress.

According to the present invention, the band of reinforcement fibers can be free of resin, partly or fully impregnated with a resin or a resin including matrix before being applied onto a contact area on an internal face of the pipe.

A resin suitable for the invention is, for example, a thermoset resin, such as an epoxide base resin, or a thermoplastic resin.

According to an embodiment of the present invention, the band is composed principally of carbon fibers with well established qualities as reinforcement fibers.

According to another embodiment, the band is composed principally of glass fibers.

In an advantageous embodiment the band is a fabric, for example an unidirectional fabric.

According to another embodiment, the fibers of the band are continuous unidirectional fibers.

According to another embodiment the band is preimpregnated with at least a resin or resin including matrix, advantageously using a thermoplastic resin.

The preimpregnation resin can be a thermoset resin or a thermoplastic resin. When using thermoplastic resin, it is possible to heat the preimpregnated band before or when applying said band onto the contact area on the internal face of the pipe so as to melt or soften the resin and let it stick when applying pressure in the main pressure area.

According to an embodiment, the reinforcement fibers are provided free of resin or resin including matrix and then in situ impregnated with a resin or a resin including matrix to form the band.

According to still another embodiment, said method comprises the step of moving a coating member along the helical path and coating the internal face of said pipe with a resin or resin including matrix in a coating area forward the contact area.

It is thus possible to precoat the internal face of the pipe before applying the band. The resin of this step can be the same than the stratification process or of a different type.

According to another embodiment, the method of the invention comprises the step of moving a coating member along said helical path and coating the previously applied band on said internal face of said pipe with a resin or resin including matrix in a coating area behind said contact area and applying pressure through a secondary pressing member to said band in a secondary pressure area situated behind said main pressure area.

It is thus possible to apply a resin or a resin including matrix on the previously applied band and to impregnate the band.

Said coating member and secondary pressing member can be a sole member, such as a roll. They can also be separate members. A pulverisation member can be such a coating member.

According to another embodiment, the reinforcement fibers are impregnated with a resin or a resin including matrix before the step of applying the band onto the contact area.

According to this embodiment the reinforcement fibers are impregnated through rollers containing resin or resin including matrix.

According to preceding embodiments, the resin or the resin including matrix may be obtained by mixing at least an unpolymerized resin and a hardening agent just before the coating step. This embodiment is advantageous when using bi-components resins, such as bi-components epoxy resins.

Furthermore and according to the invention

- the band is fed to contact area of internal face of said pipe at a first running speed, $V_1$;
- the band is pressed against the internal face of said pipe in the main pressure area at a second running speed, $V_2$;

where said second running speed, $V_2$, is less than first running speed $V_1$, and at least 90% of $V_1$, in particular at least 95%

In an advantageous embodiment, $V_2$ is 98% to 99% of $V_1$.

It is thus possible to release stresses in the band between the contact area and the main pressure area. The band may be free of stress and suitable to fit perfectly the internal face of the pipe, even if surface defects on said internal face are encountered.

According to another advantageous embodiment, the forward moving speed along the axis of the pipe, $V_F$, of the stratification process is driven by said second running speed, $V_2$.

According to preceding embodiment, forward moving speed, $V_F$, may be about,

$$V_F = V_2 * W/ (2 \Pi * R * N)$$

where W is the width of the band;
R is the radius of the internal side of said pipe;
N is the number of band layers of the composite structural reinforcement.

Following an example of the repair process, running speed $V_2$ is less than 1 m per minute at beginning of the stratification process and progressively increased up to a constant running speed between 5 to 10 m per minute, for example 8 m per minute.

In a further embodiment, contacting member and/or main pressing member are radially adjustable (a) so as to be kept in contact with the internal face of said pipe.

It is then possible to contact and/or press onto said internal face with a constant stress all along the repair process.

Radially adjustable distance of contacting member and/or pressing member is also advantageous to fit different pipe diameters.

In still another embodiment, contacting member includes a roller driven by a wheel contacting the internal face of said pipe before applying the composite structural reinforcement, and where the peripheral speed of said roller is increased compared to the peripheral speed of said wheel. The peripheral speed of said wheel is driven by forward moving speed $V_F$, and is very close to $V_2$.

Following another embodiment, the band is unwinded from a roll prior to contact the internal face of said pipe.

The roll can be situated inside the pipe to be repaired, preferably moved at forward moving speed $V_F$ or situated out of the pipe and the band introduced through a pipe hole.

In an advantageous embodiment the tension of the unwinded band is regulated so that the band is stress free when applied onto contact area.

According to preceding embodiments the contact pressure in contact area and/or the pressure in main pressure area may be regulated and remain roughly constant along the helical path.

In a further aspect of the invention, there is provided a machine for reinforcing an internal side of an embedded cylinder pipe with a composite structural reinforcement, said composite structural reinforcement comprising at least a band of reinforcement fiber and a resin or resin including matrix, said machine comprising:

- a contacting member capable of applying the band to the internal face of said pipe;
- a pressing member capable of applying pressure to said band against the internal face of said pipe;
- a moving member capable of moving said contacting member and pressing member along an helical path;

where said contacting member and said pressing member are angularly shifted ($\alpha$) one from the other ; and where said machine is configured so that:

- the band is fed to contact area of internal face of said pipe at a first running speed, $V_1$ ;
- the band is pressed against the internal face of said pipe in the main pressure area at a second running speed, $V_2$;

and wherein said second running speed, $V_2$, is less than first running speed $V_1$ , and at least 90 % of $V_1$.

Using such a machine makes possible to repair a pipe following preceding method of reinforcing an embedded cylinder pipe. Such a machine can advantageously be robotized.

Process parameters can be controlled through control units.

The angle $\alpha$ between said contacting member and said pressing member is preferably 5° to 30°, advantageously greater than 7° and/or less than 15°, for example less than 10°.

According to an embodiment, the machine comprises further a band providing member, comprising for example a band roll. As band providing member is part of the machine, it is then possible to run the process completely from inside the pipe.

According to previous embodiment, the rotating speed of said band roll may be regulated through a rotating device, such as for example a jack or an engine.

Advantageously the band roll is mounted on a free roll where said jack is attached.

In another embodiment providing member includes at least a drive and tensioning roller. Such a drive and tensioning roller is advantageously regulated so as the band is free of stress.

Following still another embodiment, moving member comprises a rotating member which rotation axis is movable so as to match the longitudinal axis of said pipe and a forward moving member.

In an advantageous embodiment, rotating member includes a rotating motor linked to a vertically sliding member.

According to preceding embodiments, rotating member may include a rotating joint linked to a rotating motor.

According to still another embodiment, contacting member and pressing member are part of a single rotating unit, said rotating unit comprising a shaft linked to a rotating member.

In an advantageous embodiment, the machine further comprises a coating member, comprising for example a coating roller, capable of coating the internal face of said pipe, linked to the moving member, and being angularly shifted from both contacting member and pressing member.

According to preceding embodiment, the coating roller is fed by a plurality of feeding members, comprising for example a plurality of tubes linked to at least a tank.

According to another embodiment the machine further comprises impregnation rollers situated between the band providing member and the contacting member along the band path. The impregnation rollers may be situated between the tensioning roller and the contacting member. Said impregnation rollers may be surrounded each by a resin or resin including matrix retaining shell fed with feeding members.

According to preceding embodiments, the machine includes at least two separate tanks, where a first tank is suitable to contain unpolymerized resin and a second tank is suitable to contain an hardener agent, and where said unpolymerized resin and hardener agent are mixed close to said coating roller.

According to an embodiment, contacting member and/or pressing member are attached to a shaft through radially extendable arm(s).

According to preceding embodiment, radially extendable arm may be radially regulated through actuating a pneumatic jack.

In an advantageous embodiment, contacting member and/or pressing member comprise a roller and/or a blade and/or a brush.

In a further advantageous embodiment, contacting member comprises a roller driven by a wheel suitable to contact the internal face of the pipe, said wheel being linked to said roller with a peripheral speed increase member.

In another embodiment, the machine includes a forward moving member which includes a driving wheel suitable to contact the internal face of said pipe, said driving wheel being moved by a motor through a stabilization member.

According to previous embodiment, the stabilization member may comprise two inclined wheels situated from each side of driving wheel and capable of contacting the internal face of the pipe, said wheels being linked to arms in an adjustable position along said arms.

Following another advantageous embodiment, the machine further includes a front wheel. Said front wheel is intended to orientate the machine when moving forward.

In a preferred embodiment, the front wheel is situated forward the driving wheel.

In another advantageous embodiment, the machine further includes a gyroscope, for example a pendulum, and a controller unit activated by said gyroscope and orientating the front wheel to keep the horizontal position of the machine.

Specific embodiments of the invention will now be described in some further detail with reference to and as illustrated in the accompanying figures. These embodiments are illustrative, and are not meant to be restrictive of the scope of the invention.

In the accompanying drawings:

Figure 1 shows a diagrammatic cross section of a pipe repaired according to the invention.
Figure 2 shows a perspective view from the back of an embodiment of a machine according to the invention applying a composite structural reinforcement according to a process of the invention.
Figure 3 shows a more detailed perspective view of part of the machine of Figure 2 from the back.
Figure 4 shows a side view of the part of the machine of Figure 3.
Figure 5 shows a diagrammatic cross section of a pipe repaired according to another embodiment of the invention.

If necessary, the internal face of a repair section is prepared mechanically and/or chemically (cleaning, sanding, degreasing...) after emptying said section of the pipe.

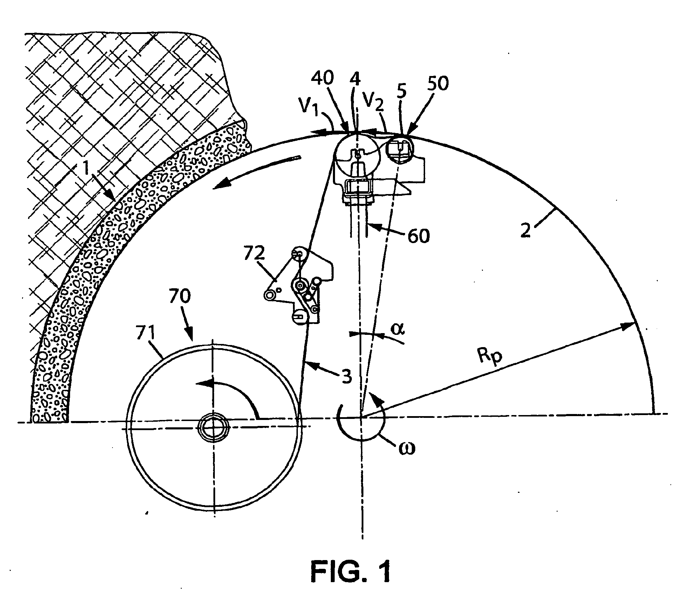

The cross section of Figure 1 is shown from the back of pipe being repaired.

Following the present description, the front of the pipe is the part of the pipe which is not repaired and the back of the pipe is the part of the pipe where a composite reinforcement has already been applied.

Using the same wording, the front of a machine according to the invention is the end part of the machine in the forward moving direction and the back of the machine is the opposite end part. Forward moving speed is referred as $V_F$.

According to the invention, a composite reinforcement is arranged inside a damaged underground pipe 1 which radius is Rp. This reinforcement is composed of a band of fibers 3 wound according to a helical path along the internal face 2 of said pipe 1.

Band 3 is unwinded from a band roll 71 which is part of a band providing member 70.

Band 3 is then driven through drive and tensioning rollers 72 and feeds a contacting member 40.

Said contacting member 40 comprises a roller 41. Band 3 is applied onto contact area 4 by means of said contacting member 40. Band 3 is then pressed through a main pressing member 50 in a main pressure area 5. Said pressure area 5 is separated from said contact area 4.

Both contacting member 40 and pressing member 50 are rotating around axis 21 at a rotating speed w. Axis 21 is arranged so as to coincide with the longitudinal axis of cylinder pipe 1.

Contacting member 40 and pressing member 50 are angularly shifted one from the other by an angle $\alpha$. As for an example, $\alpha$ is 8°.

The running speed of band 3 when fed to contact area 4 is referred as $V_1$. The running speed of band 3 when pressure is applied in main pressure area 5 is referred as $V_2$.

In the present embodiment there running speeds are respectively the peripheral speeds of rollers 41 and 51.

The reinforcement fibers of the band 3 are made from a resistant material (resistance to breaking typically greater than 1500 MPa) and are of a high elastic module (typically between 100 and 400 GPa). Carbon fibers will generally be used for this (resistance to breaking in the range of 3000 MPa). By way of example, the band 3 has a width of 600 mm and is composed of carbon fibers oriented in the sense of a chain with a small proportion of glass fibers arranged in the sense of a frame in order to obtain a coherent tissue.

The resin used can have an epoxide base. The resin can be heatset and provided to polymerize at ambient temperature. It is for example an epoxy resin, bi-components of the type mentioned EP-A-0 799 951.

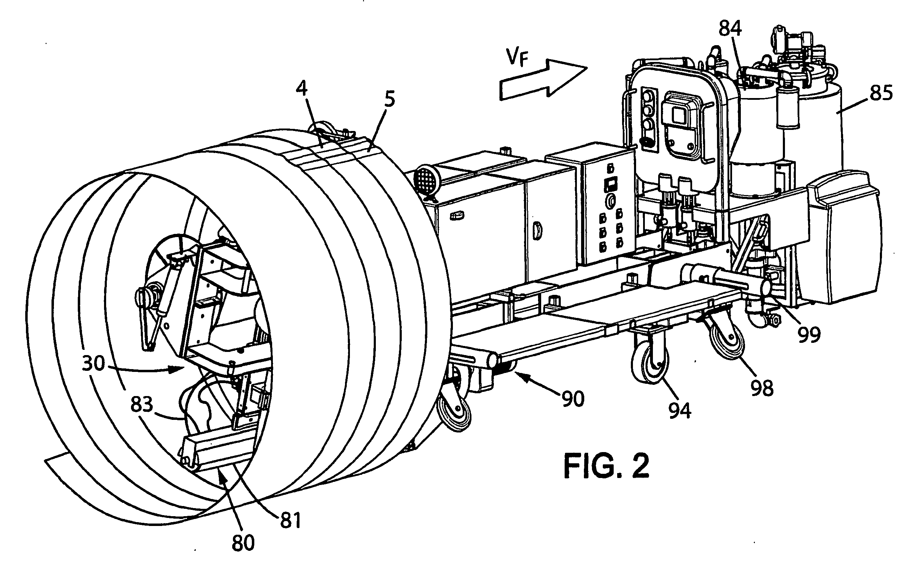

In the embodiment shown in Figures 2, 3, 4, a machine of the invention is built on a frame onto which a rotating unit 30 is attached. Said rotating unit is situated at the back end of said machine.

Tanks are provided at the front end of the machine, comprising a tank 85 for unpolymerized resin and a tank 84 for hardener agent. Pumps are used to bring resin and hardener agent in the rotating unit 30 and feed a coating roller 81, which is part of a coating member 80, through a plurality of tubes 83.

Roller 81 of coating member 80 is larger than the band width and partially disposed ahead the helical path of the band. It thus provides simultaneously coating forward contact area 4 and coating the previously applied band. Following the present embodiment, roller 81 is simultaneously a coating and a secondary pressing member.

ber.

The machine is driven by a forward moving member 90 and orientated by front wheel 94. A stabilization member 95 is formed of two pairs of inclined wheels 96, 98 which are situated from each side of the frame and linked to arms 97, 99 in an adjustable position and contact the internal face of the pipe.

In Figure 2, the pipe has been removed but the applied band 3 can still be seen. In the present embodiment the advancing of the band over a winding turn corresponds to about a third of the width of the band and this ensures three thicknesses of fibers on the surface of the pipe. One can see the impression of rollers 41 and 51, forming respectively contact area 4 and pressure area 5.

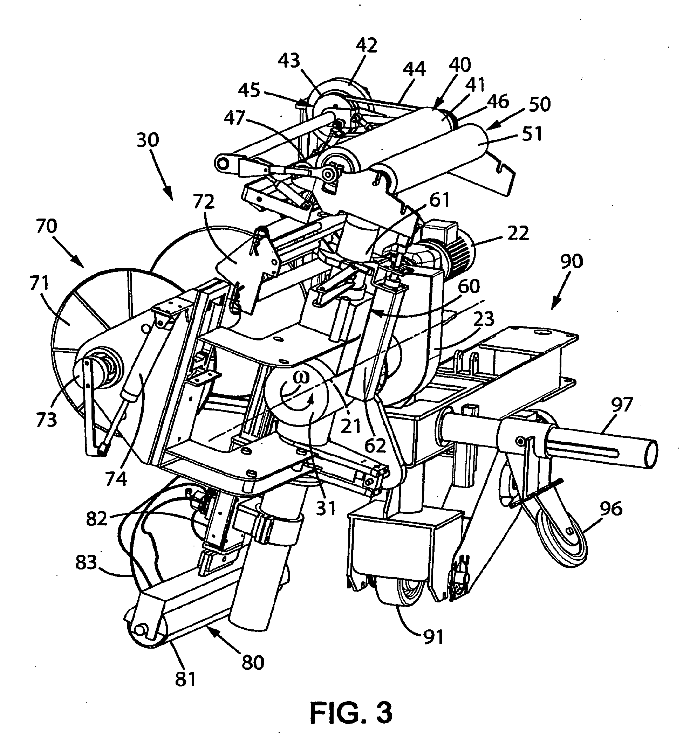

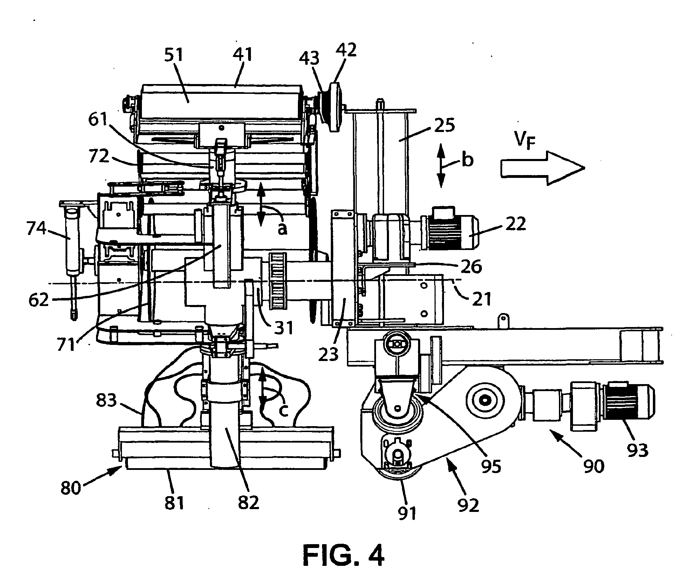

Referring now to Figures 3 and 4 where rotating unit 30 and forward moving member 90 can be seen with more details:

> The machine is moved forward by driving wheel 91 linked to motor 93 by a belt (inside part 92).

Rotating unit 30 is linked by shaft 31 to motor 22 through rotating joint 23. Compressed air, resin and hardener agent can pass through said rotating joint 23.

Motor 22 is linked through support part 26 to a vertically sliding member 25. Sliding member 25 comprises an endless screw and a guiding part. It is thus possible to vary vertically the position (b) of axis 21 of the rotating unit 30.

Said rotating unit 30 comprises a contacting member 40, a pressing member 50, a coating member 80.

Contacting member 40 and pressing member 50 are linked to shaft 31 through arm 60. Arm 60 comprises a radially extendable (a) part 61 activated by a pneumatic jack 62.

Coating member 80 is linked to shaft 31 by a radially extendable (c) part 82.

Contacting member 40 comprises a roller 41 which is rotated by a belt 44, said belt 44 being rotated by a wheel 42 contacting the internal face of the pipe. Belt 44 engages pulleys 43 and 46. Pulley 43 is linked to wheel 42 where pulley 46 is linked to roller 41. Diameter of pulley 46 is less than diameter of pulley 43 so as the rotation speed of roller 41 is greater than the one of wheel 42 and to constitute a peripheral speed increase member 45.

It is thus possible to increase running speed $V_1$ compared to running speed $V_2$.

The band to be applied is unwinded from providing member 70, and feeds roller 41 after being driven to said roller 41 by an intermediate roller 47.

Providing member 70 is mounted on rotating unit 30 by means of a free roll 73 which can be activated by a jack 74.

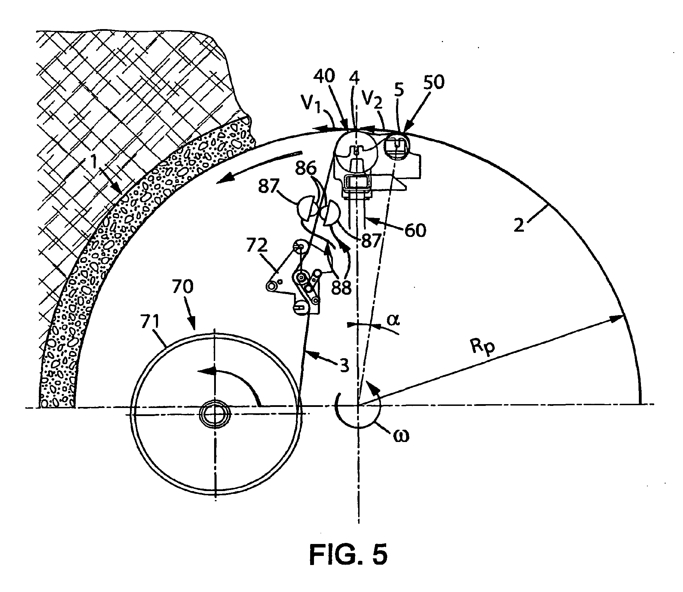

Figure 5 shows a diagrammatic cross section of a pipe repaired according to another embodiment of the invention which differs from the embodiments of figure 1 to 4 in the resin providing means.

Identical numeral references indicate the same parts.

The band 3 is unwinded from a band roll 71, driven through drive and tensioning rollers 72 and impregnated with a resin or a resin including matrix thanks to two rollers 86 before being applied onto contact area 4.

The impregnation rollers 86 are situated in front of each other so as to press onto the band 3.

Said impregnation rollers 86 may be made of foam or of a spongy material. They are each surrounded by shells 87 to provide and retain the resin or resin containing matrix. Said shell 87 may include lips to avoid the resin to flow out the shell.

The shell 87 is fed with feeding members 88. The feeding members 88 may comprise a plurality of tubes linked to at least a tank so as to feed the shell 87 in a plurality of feeding points and to provide uniform distribution of the resin onto the rollers 86 and then onto the band 3, all over its width.

Rollers 86 are equipped with motors and have a variable rotation speed so as to control the band impregnation level as a function of the first running speed $V_1$.

Rollers 86 are attached to extendable arm 60.

A lip gasket or a long bristles rug or brush or any other suitable impregnation means could be used instead of or in addition to the rollers 86.

According to the embodiment of figure 5, the coating member 80 of figures 2 to 4 can be avoided.

It may be advantageous to keep a roller 81 as a second pressing member.

Following this embodiment said roller 81 is no more fed with resin and feeding members 83 are withdrawn.

Said roller 81 is then used as a finishing member. It can be associated with a blade or a scrapper to smooth the internal surface of the composite structural reinforcement.

The invention is not restricted to the above described embodiments which can be varied in a number of ways within the scope of the claims.

## Claims

1. A method of reinforcing an embedded cylinder pipe (1) by applying a composite structural reinforcement within the pipe through in situ stratification of at least one band (3) of reinforcement fibers and a resin or a resin including matrix comprising the steps of

   - applying said band onto a contact area (4) on an internal face (2) of said pipe by means of a contacting member (40);
   - moving said contacting member (40) along an helical path so that said contact area follows said path;
   - moving a main pressing member (50) behind said contacting member (40) along said path, to apply pressure to said band (3) in a main pressure area (5) separated from said contact area (4);

   and wherein:

   - said band (3) is fed to contact area (4) of internal face (2) of said pipe at a first running speed, $V_1$;
   - said band (3) is pressed against the internal face (2) of said pipe in the main pressure area (5) at a second running speed, $V_2$;

   where said second running speed, $V_2$, is less than first running speed $V_1$, and at least 90 % of $V_1$.

2. The method of claim 1, wherein the band (3) is composed principally of carbon fibers.

3. The method according to claims 1 or 2 wherein the band (3) is a fabric, for example an unidirectional fabric.

4. The method according to any of preceding claims comprising the step of moving a coating member (80) along said helical path and coating the internal face (2) of said pipe with a resin or resin including matrix in a coating area forward said contact area (4).

5. The method according to any of preceding claims comprising the step of moving a coating member (80) along said helical path and coating the previously applied band (3) on said internal face (2) of said pipe with a resin or resin including matrix in a coating area (8) behind said contact area (5) and applying pressure through a secondary pressing member (80) to said band (3) in a secondary pressure area (8) situated behind said main pressure area (5).

6. The method according to any of preceding claims where said second running speed, $V_2$, is at least 95 % of $V_1$.

7. The method according to claim 6 where $V_2$ is 98% to 99% of $V_1$ and/or the forward moving speed along the axis of the pipe, $V_F$, of the stratification process is driven by said second running speed, $V_2$.

8. The method according to claim 7 where said forward moving speed, $V_F$, is about,

$$V_F = V_2 * W/ (2\ \Pi * R * N)$$

where W is the width of the band;

R is the radius of the internal side of said pipe;
N is the number of band layers of the composite structural reinforcement.

9. The method according to any of preceding claims where contacting member (40) includes a roller (41), driven by a wheel (42) contacting the internal face (2) of said pipe before applying the composite structural reinforcement, and where the peripheral speed ($V_1$) of said roller (41) is increased compared to the peripheral speed ($V_2$) of said wheel (42).

10. A machine for reinforcing an internal side (2) of an embedded cylinder pipe (1) with a composite structural reinforcement, said composite structural reinforcement comprising at least a band (3) of reinforcement fiber and a resin or resin including matrix, said machine comprising:

- a contacting member (40) capable of applying the band (3) to the internal face (2) of said pipe;
- a pressing member (50) capable of applying pressure to said band (3) against the internal face (2) of said pipe;
- a moving member (20, 90) capable of moving said contacting member (40) and pressing member (50) along an helical path;

where said contacting member (40) and said pressing member (50) are angularly shifted (a) one from the other; **characterized in that** said machine is configured so that .

- the band (3) is fed to contact area (4) of internal face (2) of said pipe at a first running speed, $V_1$;
- the band (3) is pressed against the internal face (2) of said pipe in the main pressure area (5) at a second running speed, $V_2$;

and wherein said second running speed, $V_2$, is less than first running speed $V_1$, and at least 90 % of $V_1$.

11. The machine of claims 10 where said moving member comprises a rotating member (20) which rotation axis (21) is movable so as to match the longitudinal axis of said pipe and a forward moving member (90).

12. The machine of any one of claims 10 to 11 where said contacting member (40) and said pressing member (50) are part of a single rotating unit (30), said rotating unit (30) comprising a shaft (31) linked to a rotating member (20).

13. The machine of any one of claims 10 to 12 further comprising a coating member (80), comprising for example a coating roller (81), capable of coating the internal face (2) of said pipe, linked to the moving member, and being angularly shifted from both contacting member (40) and pressing member (50).

14. The machine of any one of claims 10 to 13 where said contacting member (40) and/or said pressing member (50) are attached to a shaft (31) through radially extendable arm(s) (60).

15. The machine of any one of claims 10 to 14 including a forward moving member (90) which includes a driving wheel (91) suitable to contact the internal face (2) of said pipe, said driving wheel (91) being moved by a motor (93) through a stabilization member (95).

**Patentansprüche**

1. Verfahren zum Verstärken eines eingebetteten Zylinderrohrs (1) durch Aufbringen einer Verbundstrukturverstärkung innerhalb des Rohrs durch lokale Schichtung von mindestens einem Band (3) aus Verstärkungsfasern und eines Harzes oder einer Harz umfassenden Matrix, das die folgenden Schritte umfasst

- Aufbringen des Bandes auf einen Kontaktbereich (4) an einer Innenfläche (2) des Rohrs mittels eines Kontaktelements (40);
- Bewegen des Kontaktelements (40) entlang eines schraubenlinienförmigen Weges, so dass der Kontaktbereich dem Weg folgt;
- Bewegen eines Hauptpresselements (50) hinter dem Kontaktelement (40) entlang des Weges, um einen Druck auf das Band (3) in einem Hauptdruckbereich (5) aufzubringen, der vom Kontaktbereich (4) getrennt ist;

und wobei:

- das Band (3) dem Kontaktbereich (4) der Innenfläche (2) des Rohrs mit einer ersten Laufgeschwindigkeit V1 zugeführt wird;
- das Band (3) gegen die Innenfläche (2) des Rohrs im Hauptdruckbereich (5) mit einer zweiten Laufgeschwindigkeit V2 gepresst wird;

wobei die zweite Laufgeschwindigkeit V2 geringer als die erste Laufgeschwindigkeit V1 und mindestens 90 % von V1 ist.

2. Verfahren nach Anspruch 1, wobei das Band (3) hauptsächlich aus Kohlenstofffasern besteht.

3. Verfahren nach den Ansprüchen 1 oder 2, wobei das Band (3) ein Gewebe, beispielsweise ein unidirektionales Gewebe, ist.

4. Verfahren nach einem der vorangehenden Ansprüche mit dem Schritt des Bewegens eines Beschichtungselements (80) entlang des schraubenlinienförmigen Weges und des Beschichtens der Innenfläche (2) des Rohrs mit einem Harz oder einer Harz umfassenden Matrix in einem Beschichtungsbereich vor dem Kontaktbereich (4).

5. Verfahren nach einem der vorangehenden Ansprüche mit dem Schritt des Bewegens eines Beschichtungselements (80) entlang des schraubenlinienförmigen Weges und des Beschichtens des vorher aufgebrachten Bandes (3) an der Innenfläche (2) des Rohrs mit einem Harz oder einer Harz umfassenden Matrix in einem Beschichtungsbereich (8) hinter dem Kontaktbereich (5) und des Aufbringens von Druck durch ein sekundäres Presselement (80) auf das Band (3) in einem sekundären Druckbereich (8), der hinter dem Hauptdruckbereich (5) liegt.

6. Verfahren nach einem der vorangehenden Ansprüche, wobei die zweite Laufgeschwindigkeit V2 mindestens 95 % von V1 ist.

7. Verfahren nach Anspruch 6, wobei V2 98 % bis 99 % von V1 ist und/oder die Vorwärtsbewegungsgeschwindigkeit entlang der Achse des Rohrs, VF, des Schichtungsprozesses durch die zweite Laufgeschwindigkeit V2 getrieben wird.

8. Verfahren nach Anspruch 7, wobei die Vorwärtsbewegungsgeschwindigkeit VF etwa

$$V_F = V_2 * W/(2\pi * R * N)$$

ist, wobei
W die Breite des Bandes ist;
R der Radius der Innenseite des Rohrs ist;
N die Anzahl von Bandschichten der Verbundstrukturverstärkung ist.

9. Verfahren nach einem der vorangehenden Ansprüche, wobei das Kontaktelement (40) eine Rolle (41) umfasst, die durch ein Rad (42) angetrieben wird, das mit der Innenfläche (2) des Rohrs in Kontakt steht, bevor die Verbundstrukturverstärkung aufgebracht wird, und wobei die Umfangsgeschwindigkeit (V1) der Rolle (41) im Vergleich zur Umfangsgeschwindigkeit (V2) des Rades (42) erhöht wird.

10. Maschine zum Verstärken einer Innenseite (2) eines eingebetteten Zylinderrohrs (1) mit einer Verbundstrukturverstärkung, wobei die Verbundstrukturverstärkung mindestens ein Band (3) aus Verstärkungsfaser und ein Harz oder eine Harz umfassende Matrix umfasst, wobei die Maschine umfasst:

- ein Kontaktelement (40), das in der Lage ist, das Band (3) auf die Innenfläche (2) des Rohrs aufzubringen;
- ein Presselement (50), das in der Lage ist, einen Druck auf das Band (3) gegen die Innenfläche (2) des Rohrs aufzubringen;
- ein Bewegungselement (20, 90), das in der Lage ist, das Kontaktelement (40) und das Presselement (50) entlang eines schraubenlinienförmigen Weges zu bewegen;

wobei das Kontaktelement (40) und das Presselement (50) in einem Winkel (α) voneinander verschoben sind;
**dadurch gekennzeichnet, dass**
die Maschine so konfiguriert ist, dass:

- das Band (3) dem Kontaktbereich (4) der Innenfläche (2) des Rohrs mit einer ersten Laufgeschwindigkeit V1 zugeführt wird;
- das Band (3) gegen die Innenfläche (2) des Rohrs im Hauptdruckbereich (5) mit einer zweiten Laufgeschwindigkeit V2 gepresst wird;

und wobei die zweite Laufgeschwindigkeit V2 geringer als die erste Laufgeschwindigkeit V1 und mindestens 90 % von V1 ist.

11. Maschine nach Anspruch 10, wobei das Bewegungselement ein Drehelement (20), dessen Drehachse (21) so beweglich ist, dass sie der Längsachse des Rohrs entspricht, und ein Vorwärtsbewegungselement (90) umfasst.

12. Maschine nach einem der Ansprüche 10 bis 11, wobei das Kontaktelement (40) und das Presselement (50) ein Teil einer einzigen Dreheinheit (30) sind, wobei die Dreheinheit (30) eine Welle (31) umfasst, die mit einem Drehelement (20) verbunden ist.

13. Maschine nach einem der Ansprüche 10 bis 12, die ferner ein Beschichtungselement (80) mit beispielsweise einer Beschichtungsrolle (81) umfasst, die in der Lage ist, die Innenfläche (2) des Rohrs zu beschichten, mit dem Bewegungselement verbunden ist und sowohl vom Kontaktelement (40) als auch vom Presselement (50) in einem Winkel verschoben ist.

14. Maschine nach einem der Ansprüche 10 bis 13, wobei das Kontaktelement (40) und/oder das Presselement (50) an einer Welle (31) durch (einen) radial ausfahrbare(n) Arm(e) (60) befestigt sind.

15. Maschine nach einem der Ansprüche 10 bis 14 mit einem Vorwärtsbewegungselement (90), das ein Antriebsrad (91) umfasst, das zum Kontaktieren der Innenfläche (2) des Rohrs geeignet ist, wobei das Antriebsrad (91) durch einen Motor (93) über ein Stabilisierungselement (95) bewegt wird.

## Revendications

1. Procédé de renforcement d'une conduite cylindrique enterrée (1) en appliquant un renfort structurel composite dans la conduite par stratification in situ d'au moins une bande (3) de fibres de renforcement et d'une résine ou une matrice contenant une résine, le procédé comportant les étapes suivantes:

   - appliquer ladite bande sur une zone de contact (4) sur une face interne (2) de ladite conduite au moyen d'un organe de contact (40);
   - déplacer ledit organe de contact (40) suivant une trajectoire hélicoïdale de façon que ladite zone de contact suive ladite trajectoire;
   - déplacer un organe de pression principal (50) derrière ledit organe de contact (40) suivant ladite trajectoire, afin d'appliquer une pression à ladite bande (3) dans une zone de pression principale (5) séparée de ladite zone de contact (4);

   et dans lequel :

   - ladite bande (3) est amenée dans la zone de contact (4) de la face interne (2) de ladite conduite à une première vitesse de fonctionnement, $V_1$;
   - ladite bande (3) est pressée contre la face interne (2) de ladite conduite dans la zone de pression principale (5) à une seconde vitesse de fonctionnement, $V_2$,

   ladite seconde vitesse de fonctionnement, $V_2$, étant inférieure à la première vitesse de fonctionnement $V_1$, et étant au moins 90 % de $V_1$.

2. Procédé selon la revendication 1, dans lequel la bande (3) est principalement composée de fibres de carbone.

3. Procédé selon les revendications 1 ou 2, dans lequel la bande (3) est un tissu, par exemple un tissu unidirectionnel.

4. Procédé selon l'une quelconque des revendications précédentes, comprenant une étape consistant à déplacer un organe d'enduction (80) suivant ladite trajectoire hélicoïdale et à enduire la face interne (2) de ladite conduite avec une résine ou une matrice contenant une résine dans une zone d'enduction en avant de ladite zone de contact (4).

5. Procédé selon l'une quelconque des revendications précédentes, comprenant une étape consistant à déplacer un organe d'enduction (80) suivant ladite trajectoire hélicoïdale et à enduire la bande (3) appliquée précédemment sur ladite face interne (2) de ladite conduite avec une résine ou une matrice contenant une résine dans une zone d'enduction (8) en arrière de ladite zone de contact (5) et à appliquer une pression via un second organe de pression (80) à ladite bande (3) dans une zone de pression secondaire (8) située en arrière de ladite zone de pression principale (5).

6. Procédé selon l'une quelconque des revendications précédentes,
   dans lequel ladite seconde vitesse de fonctionnement, $V_2$, est au moins 95 % de $V_1$.

7. Procédé selon la revendication 6, dans lequel $V_2$ est de 98 % à 99 % de $V_1$, et/ou la vitesse de déplacement vers l'avant le long de l'axe de la conduite, $V_F$, du processus de stratification est gouvernée par ladite seconde vitesse de fonctionnement, $V_2$.

8. Procédé selon la revendication 7, dans lequel ladite vitesse de déplacement vers l'avant, $V_F$, est environ,

$$V_F = V_2 * W / (2 \Pi * R * N)$$

où: W est la largeur de la bande ;
R est le rayon du côté interne de ladite conduite ;
N est le nombre de couches de bande du renfort structurel composite.

9. Procédé selon l'une quelconque des revendications précédentes, dans lequel l'organe de contact (40) comprend un rouleau (41), entraîné par une roue (42) en contact avec la face interne (2) de ladite conduite avant d'appliquer le renfort structurel composite, et dans lequel la vitesse périphérique ($V_1$) dudit rouleau (41) est augmentée par rapport à la vitesse périphérique ($V_2$) de ladite roue (42).

10. Machine pour renforcer un côté interne (2) d'une conduite cylindrique enterrée (1) avec un renfort structurel composite, ledit renfort structurel composite comprenant au moins une bande (3) de fibre de renforcement et une résine ou une matrice contenant une résine, ladite machine comprenant :

    - un organe de contact (40) capable d'appliquer la bande (3) sur la face interne (2) de ladite conduite;
    - un organe de pression (50) capable d'appliquer une pression à ladite bande (3) contre la face interne (2) de ladite conduite;
    - un organe de déplacement (20, 90) capable de déplacer ledit organe de contact (40) et ledit organe de pression (50) le long d'une trajectoire hélicoïdale;

ledit organe de contact (40) et ledit organe de pression (50) présentant un décalage angulaire (a) l'un par rapport à l'autre, **caractérisée en ce que** ladite machine est configurée de façon que:

- la bande (3) soit amenée dans une zone de contact (4) de la face interne (2) de ladite conduite à une première vitesse de fonctionnement, $M_1$;
- la bande (3) soit pressée contre la face interne (2) de ladite conduite dans la zone de pression principale (5) à une seconde vitesse de fonctionnement, $V_2$,

et dans laquelle ladite seconde vitesse de fonctionnement, $V_2$, est inférieure à la première vitesse de fonctionnement $V_1$, et est au moins 90 % de $V_1$.

**11.** Machine selon la revendication 10, dans laquelle ledit organe de déplacement comprend un organe rotatif (20) dont l'axe de rotation (21) est déplaçable de façon à correspondre à l'axe longitudinal de ladite conduite, et un organe de déplacement vers l'avant (90).

**12.** Machine selon l'une quelconque des revendications 10 à 11, dans laquelle ledit organe de contact (40) et ledit organe de pression (50) font partie d'une même unité de rotation (30), ladite unité de rotation (30) comprenant un arbre (31) relié à un organe de rotation (20).

**13.** Machine selon l'une quelconque des revendications 10 à 12, comprenant en outre un organe d'enduction (80), comprenant par exemple un rouleau d'enduction (81) capable d'eduire la face interne (2) de ladite conduite, relié à l'organe de déplacement, et présentant un décalage angulaire par rapport à la fois à l'organe de contact (40) et à l'organe de pression (50).

**14.** Machine selon l'une quelconque des revendications 10 à 13, dans laquelle lesdits organes de contact (40) et/ou lesdits organes de pression (50) sont fixés à un arbre (31) via un ou plusieurs bras radialement extensibles (60).

**15.** Machine selon l'une quelconque des revendications 10 à 14, comprenant un organe de déplacement vers l'avant (90) qui comprend une roue d'entraînement (91) adaptée pour entrer en contact avec la face interne (2) de ladite conduite, ladite roue d'entraînement (91) étant déplacée par un moteur (93) via un organe de stabilisation (95).

**FIG. 1**

FIG. 2

EP 2 013 528 B1

FIG. 3

FIG. 4

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03014614 A
- DE 2160144
- US 20050246995 A1
- EP 0799951 A